# EUROPÄISCHE PATENTSCHRIFT

(11) **EP 1 131 260 B1**
(45) Veröffentlichungstag und Bekanntmachung des Hinweises auf die Patenterteilung: **04.02.2004**
(21) Anmeldenummer: 99955992.5
(22) Anmeldetag: 13.11.1999
(51) Int. Cl.: B65H 37/00, B65H 35/00

(54) **VERFAHREN UND VORRICHTUNG ZUM SPENDEN VON FLÄCHIGEN GEBILDEN**
METHOD AND DEVICE FOR DISPENSING FLAT FORMS
PROCEDE ET DISPOSITIF DESTINES LA DELIVRANCE DE STRUCTURES PLATES

(30) Priorität: 21.11.1998 DE 19853737
(43) Veröffentlichungstag der Anmeldung: 12.09.2001
(73) Patentinhaber: LTS Lohmann Therapie-Systeme AG, 56626 Andernach (DE)
(72) Erfinder: SCHUMANN, Klaus, D-56567 Neuwied (DE); STEINBORN, Peter, D-56567 Neuwied (DE)
(86) Internationale Anmeldenummer: PCT/EP1999/008758
(87) Internationale Veröffentlichungsnummer: WO 2000/030963

(56) Entgegenhaltungen:
- EP-A- 0 345 606
- WO-A-87/00121
- DE-C- 19 547 691
- GB-A- 397 826
- US-A- 3 416 396
- US-A- 3 767 039
- US-A- 3 920 122
- US-A- 5 240 755
- US-A- 5 656 285

## Beschreibung

Die Erfindung ist auf ein Verfahren zum Spenden von flächigen Gebilden, wie z. B. Etiketten, Pflastern, Stickern, Transdermalen Therapeutischen Systemen, Aufklebern, Arzneimitteln für die orale Applikation etc. gerichtet. Durch das kontrollierte Spenden kann das flächige Gebilde auf eine Transportbahn und / oder in eine zur Herstellung einer Primärverpackung geeignete Vorrichtung übertragen werden.

Das Spenden (Übertragen) vereinzelter flächiger Gebilde ist grundsätzlich bekannt. Dazu müssen zunächst aus einer endlosen Bahn die einzelnen flächigen Gebilde hergestellt werden. Dies geschieht z. B. durch Konturstanzung. Ein derart vereinzeltes flächiges Gebilde muß dann ggf. noch von dem überstehenden Stanzrest befreit werden (sog. Abgittem) und wird anschließend an einer Spendevorrichtung, z. B. einer Umlenkkante oder Umlenkrolle gespendet. Es ist auch möglich, daß sowohl Abgittem als auch Spenden an der Spendevorrichtung erfolgen.

Aus DE 195 47 691 C1 ist ein Verfahren zur kontinuierlichen Herstellung transdermaler therapeutischer Pflaster bekannt, bei dem ein Laminat aus einer mindestens einseitig silikonisierten Hilfsschicht, einer wirkstoffhaltigen haftklebenden Schicht und einer Trägerschicht als streifenförmige Bahn vorgelegt und die durch Stanzen der Schichten quer zur Bahnrichtung erhaltenen wirkstoffhaltigen Abschnitte taktweise auf eine zweite Bahn übertragen werden. Ein kontrolliertes Spenden wird dadurch erreicht, daß der Übertragungsvorgang auf die zweite Bahn mittels einer Übertragungsvorrichtung in der Ruhephase zwischen den Takten vorgenommen wird, die sich vorzugsweise zusätzlich in Bahnrichtung hin- und herbewegen kann.

Die US 3 920 122 A betrifft ein langgestrecktes, mit Etikettaufdrucken versehenes, auf eine Vorratsrolle gewickeltes Etikettbereitstellungsband, auf dem die Etiketten mit Hilfe einer Stanzeinrichtung teilweise derart vorstanzbar sind, daß die Etikettumrisse auf dem Band jeweils von einer Vielzahl von einzelnen, hintereinander liegenden, von durchlaufenden Haltestegen unterbrochenen, das Band durchsetzenden Schnitten gebildet sind. Jenseits der von den Schnitten gebildeten Umrißlinie jedes Etiketts bildet das Band einen mittels der Haltestege die Etiketten haltenden Rahmen, der nach Abtrennung der Etiketten durch Zerstörung der Haltestege zurückbleibt. Um das Etikett vom Band zu lösen wird ein gegen das Band wirkender Stößel betätigt.

US 5 240 755 A ist auf einen Aufkleber und ein Aufkleberband ohne Trägerfolie gerichtet, welche mit einer Perforationsvorrichtung hergestellt werden. Mindestens 50% des Aufkleberbands sind entlang der Aufkleberperipherie perforiert, um das Abziehen der einzelnen Aufkleber vom Band zu erleichtern. Eine von der Stärke des Bandmaterials und der ziehenden Kraft abhängige, genügende Anzahl von Haltestegen zwischen den Aufklebern ist vorhanden, um zu verhindern, dass das Aufkleberband beim Transport des Bands für die Weiterverarbeitung ein Reißen erfolgt.

Bei den Verfahren nach dem Stand der Technik können häufig folgende Probleme auftreten. Wenn es sich bei dem Material, aus dem die endlose Bahn besteht, um einen sehr elastischen Werkstoff handelt, kann das vereinzelte flächige Gebilde zusammen mit dem überstehenden Stanzrest um die Umlenkkante umgelenkt werden, ein Spenden findet nicht statt. Dasselbe Problem kann auftreten, wenn das vereinzelte flächige Gebilde eine haftklebende Unterseite besitzt. Ein anderes Problem, nämlich die fehlende exakte Positionierung des flächigen Gebildes beim Spenden kann auftreten, wenn das flächige Gebilde so leicht ist, daß bereits ein leichter Windhauch, eine unerwünschte elektrostatische Aufladung oder ein Aufrollen des flächigen Gebildes zum Verrutschen oder Verdrehen auf der Bahn führt. Ein kontrolliertes Spenden von vereinzelten flächigen Gebilden an einer scharfen Umlenkkante ist dann ebenfalls nicht möglich.

Der Erfindung liegt die Aufgabe zugrunde, ein Verfahren und eine Vorrichtung zum kontrollierten Spenden eines flächigen Gebildes zur Verfügung zu stellen. Dabei sollen häufig auftretende Nachteile des Stands der Technik (Spendeprobleme, Positionierungsprobleme) vermieden werden.

Gelöst wird die Aufgabe durch ein Verfahren, bei dem ein mindestens zwei Schichten enthaltendes bahnförmiges Ausgangsmaterial in eine geeignete Stanzvorrichtung transportiert wird, danach die äußere Kontur des flächigen Gebildes aus dem bahnförmigen Ausgangsmaterial gestanzt wird, wobei mindestens ein Punkt zwischen dem flächigen Gebilde und dem überstehenden Rest mindestens einer Schicht des bahnförmigen Ausgangsmaterials nicht durchgestanzt wird, und abschließend das flächige Gebilde unter Bruch des zuvor nicht durchgestanzten Punkts an einer Spendevorrichtung gespendet wird.

Zunächst wird dazu das Ausgangsmaterial des flächigen Gebildes (wie z. B. Etiketten, Pflastern, Stickern, Transdermalen Therapeutischen Systemen, Aufklebern, Arzneimitteln für die orale Applikation) in eine Bahnform gebracht. Dies geschieht zum Beispiel durch Beschichten von Unterlagen (z. B. Laminaten) mit fließfähigen Stoffen bzw. Stoffgemischen und anschließendem Trocknen, durch Längsschneiden von Breitrollen aus Papier, Metallen oder Kunststoffen, Walzen einer zähen Masse, Hotmelt-Extrusion, etc. Das bahnförmige Material kann aus einer, zwei oder mehreren Schichten aufgebaut sein. Das bahnfömige Ausgangsmaterial kann auch eine haftklebende Schicht enthalten. Eine bevorzugte Ausführungsform ist ein mehrschichtiges bahnförmiges Ausgangsmaterial für die Produktion eines TTS, das eine den oder die pharmazeutischen Wirkstoff(e) enthaltende Schicht, eine Haftkleberschicht, ggf. eine die Freisetzungsgeschwindigkeit kontrollierende Membran, eine Rückschicht (backing layer) und zum Schutz der Haftkleberschicht eine Schutzschicht (sog. release liner, z. B. aus synthetischem Polymer oder Aluminiumfolie) enthält. Aus einem solchen, mindestens drei Schichten (Schutzschicht, wirkstoffhaltige Haftkleberschicht, Rückschicht) enthaltenden Laminat kann auch vor den eigentlichen, erfindungsgemäßen Verfahrensschritten in einem zusätzlichen (d. h. vorgeschalteten) Stanzschritt die Kontur des Pflasters eingestanzt werden. In diesem vorgeschalteten Stanzschritt werden dann nur Rückschicht, wirkstoffhaltige Haftkleberschicht und ggf. weitere Schichten durchstanzt, nicht aber die Schutzschicht. Diese wird nach dem Abgittem von überstehenden Resten der durchstanzten Schichten erst in den folgenden Schritten gestanzt, wobei
sichergestellt werden muß, daß die Kontur des Pflasters kleiner ist als die Kontur der Schutzschicht, welche in diesem besonderen Fall der äußeren Kontur des flächigen Gebildes entspricht.

Eine andere bevorzugte Ausführungsform ist ein folienartiges Arzneimittel für orale Applikation, welche aus einer einzigen nicht-haftklebenden Schicht bestehen kann.

In dem ersten Verfahrensschritt wird das bahnförmige Ausgangsmaterial in eine geeignete Stanzvorrichtung transportiert. Dies kann z. B. mittels einer Vorrichtung, die das bahnförmige Ausgangsmaterial mit zwei gegenüberliegenden, beweglichen Stempeln erfaßt, dann voranschiebt und anschließend losläßt (sog. Schlitten) oder durch eine am Bahnende befindliche Aufwickelvorrichtung erfolgen. Dieser Schritt kann diskontinuierlich oder kontinuierlich mit einer konstanten oder variablen Geschwindigkeit erfolgen.

Im zweiten Verfahrensschritt werden in der geeigneten Stanzvorrichtung die äußeren Konturen der einzelnen flächigen Gebilde in das bahnförmige Ausgangsmaterial gestanzt. Mit dem Begriff "Stanzen" ist der technische Vorgang gemeint, mit dem eine Trennlinie in einen Gegenstand hineingebracht wird. Andere hierfür verwendete Begriffe wie Schneiden, Zertrennen, Spalten, Reißen etc. sollen hiermit ebenfalls erfaßt werden. Im Ergebnis existiert nach einem solchen Vorgang zwischen zwei zuvor miteinander verbundenen Volumenelementen eines Werkstoffs keine Bindung mehr aus diesem Werkstoff.

Dem Fachmann sind als geeignete Stanzvorrichtungen z. B. Hubstanzen (Stanzwerkzeug mit Bandstahlschnitt) und rotative Schneidewalzen bekannt. Diese Stanzvorrichtungen besitzen Schnittkanten, die die äußere Kontur der einzelnen flächigen Gebilde festlegen. Als geeignete Stanzvorrichtung kann auch ein energiereicher Laserstrahl verwendet werden. Dieser Laserstrahl fährt die äußere Kontur der einzelnen flächigen Gebilde ab, wobei das dort befindliche Material verdampft. Dieser zweite Schritt kann also ebenfalls diskontinuierlich oder kontinuierlich mit einer konstanten oder variablen Geschwindigkeit erfolgen.

Das Stanzen in der geeigneten Stanzvorrichtung wird so ausgeführt, daß entweder alle Schichten des bahnförmigen Ausgangsmaterials (also auch die unterste Schicht) gestanzt werden, oder - vorzugsweise bei der Verwendung von zwei- oder mehrschichtigen bahnförmigen Ausgangsmaterialien - mindestens die unterste Schicht nicht. Diese mindestens eine Schicht bleibt dann ungestanzt und kann als Transportbahn dienen.

Die Besonderheit beim Stanzen der äußeren Konturen der einzelnen flächigen Gebilde in das bahnförmige Ausgangsmaterial liegt nun darin, daß diese Kontur nicht vollständig aus den jeweils gestanzten Schichten des bahnförmigen Ausgangsmaterials gestanzt wird, sondern daß mindestens ein einzelner oder nur wenige Punkte der Kontur nicht gestanzt, d. h. nicht durchtrennt werden. An dieser Stelle / diesen Stellen bestehen also nach dem zweiten Verfahrensschritt in den jeweils gestanzten Schichten noch (winzige) Brücken (Haltepunkte, Verbindungsstücke) zwischen den einzelnen Schichten des flächigen Gebildes und dem überstehenden Rest des bahnförmigen Ausgangsmaterials der jeweils gestanzten Schicht (bzw. zwischen den einzelnen flächigen Gebilden untereinander), die die technische Funktion besitzen, daß die einzelnen flächigen Gebilde (zunächst noch) an ihrer Position innerhalb des bahnförmigen Materials fixiert bleiben.

Die Position dieser Punkte (Brücken, Haltepunkte, Verbindungsstücke) auf der äußeren Kontur des einzelnen flächigen Gebildes hängt von dessen geometrischer Form und seiner Position innerhalb des bahnförmigen Ausgangsmaterials ab. Vorzugsweise liegt die Position dieses Punkts / dieser Punkte in dem hinteren Teil der äußeren Kontur des einzelnen flächigen Gebildes. Mit dem hinteren Teil ist der Bereich des vereinzelten flächigen Gebildes gemeint, der sich nach Beginn des Spendevorgangs eines einzelnen flächigen Gebildes noch auf dem zwischen Stanzvorrichtung und Spendevorrichtung (Umlenkrolle, Umlenkkante) liegenden Abschnitt des bahnförmigen Materials befindet.

Die Punkte (Brücken, Haltepunkte, Verbindungsstücke) auf der äußeren Kontur des einzelnen flächigen Gebildes können aber auch im vorderen Teil der äußeren Kontur liegen, nämlich in dem Fall, wenn die einzelnen flächigen Gebilde hinter der Spendevorrichtung in eine Vorrichtung geführt werden, die den Weitertransport mit einer höheren Geschwindigkeit bewirkt als die Geschwindigkeit, mit der die einzelnen flächigen Gebilde an der Spendevorrichtung abgegeben werden. Eine solche Vorrichtung kann z. B. aus zwei gegeneinander drückenden Rollen bestehen. Die im Vergleich zu der Transportgeschwindigkeit beim Spenden höhere Geschwindigkeit beim Weitertransport bewirkt dann den Bruch der Haltepunkte.

Die Zahl und die Ausmaße der Brücken (Haltepunkte) auf der Kontur hängen von den Stoffeigenschaften des verwendeten bahnförmigen Ausgangsmaterials (Metallfolie, Kunststofffolie, Papier, Vliesstoff, gewebte Fasern, etc.) und der Dicke der zu stanzenden Schichten ab. Bei verhältnismäßig dicken Schichten aus Materialien, die sehr reißfest sind, dürfen nur sehr kleine Brücken zwischen dem einzelnen flächigen Gebilde und dem Rest der gestanzten Schicht des bahnförmigen Ausgangsmaterial bestehen. Bei verhältnismäßig dünnen Schichten aus sehr reißempfindlichen Materialien empfiehlt es sich, mehrere punkt- oder linienförmige Brücken beim Stanzschritt stehenzulassen.

Der zweite Verfahrensschritt stellt also kein vollständiges Ausstanzen der äußeren Kontur der einzelnen flächigen Gebilde dar, weil die einzelnen flächigen Gebilde aufgrund dieser Brücken (Haltepunkte) immer noch mit den jeweiligen Schichten des überstehenden bahnförmigen Ausgangsmaterials zusammenhängen. Eine echte Vereinzelung hat also noch nicht stattgefunden.

Im dritten Verfahrensschritt wird dann das gestanzte bahnförmige Ausgangsmaterial um eine Spendevorrichtung, z. B. eine Umlenkkante oder Umlenkrolle geführt, wobei unter Bruch der Brücken (Haltepunkte) eine echte Vereinzelung und ein Spenden der so vereinzelten flächigen Gebilde erfolgen. Die ggf. vorhandenen ungestanzten Schichten des bahnförmigen Ausgangsmaterials und ggf. vorhandene Reste von überstehendem bahnförmigen Ausgangsmaterial der gestanzten Schichten (z. B. Stanzgitter, Reste abgerundeter Ecken) werden um die Spendevorrichtung herumgeführt und auf diese Weise von den gespendeten flächigen Gebilden getrennt.

Auch dieser dritte Verfahrensschritt kann diskontinuierlich oder kontinuierlich mit konstanter oder variabler Geschwindigkeit erfolgen.

Die drei Verfahrensschritte können besonders vorteilhaft beim Verpacken von flächigen Gebilden in eine geeignete Primärverpackung genutzt werden. Dazu werden die in exakter Weise (d. h. kontrolliert) gespendeten vereinzelten flächigen Gebilde auf eine zweite Transportbahn übertragen, die wiederum mit einer dritten Bahn abgedeckt wird. Durch anschließendes Versiegeln der Kanten und Querschneiden erhält man versiegelte Beutel, die jeweils ein flächiges Gebilde enthalten. Es kann sich bei der zweiten Transportbahn auch um eine mit Vertiefungen versehene Bahn aus inelastischem Kunststoff (sog. Tiefziehblister) handeln, die später mit einer dritten Bahn abgedeckt und verschweißt wird.

Wie schon erwähnt, können die einzelnen Verfahrensschritte diskontinuierlich oder kontinuierlich und mit konstanten oder variablen Geschwindigkeiten durchgeführt werden. Eine kontinuierliche Durchführung des gesamten Verfahrens ist besonders geeignet bei der Verwendung einer rolativen Schneidwalze oder eines Lasers als Stanzvorrichtung. Eine diskontinuierliche Verfahrensführung ist ebenfalls möglich und bei Verwendung einer Hubstanze oder eines Lasers sinnvoll.

Die erfindungsgemäße Vorrichtung, durch die das flächige Gebilde in die für das kontrollierte Spenden geeignete gestanzte Form gebracht wird, ist eine spezielle Stanzvorrichtung, die im zweiten Verfahrensschritt eingesetzt wird. Mit einer Stanzvorrichtung soll im weiteren, wie schon erwähnt, auch eine Schneidevorrichtung gemeint sein.

Kennzeichnend für die erfindungsgemäße Stanzvorrichtung ist eine Schnittkante, die eine oder mehrere Unterbrechungen besitzt, z. B. Kerben. Beim Stanzen der äußeren Kontur des einzelnen flächigen Gebildes entsteht an einer solchen Stelle eine Verbindungsbrücke (Haltepunkt) zwischen dem einzelnen flächigen Gebilde und dem übrigen bahnförmigen Material derselben Schicht. Je nach der Größe und Zahl dieser Verbindungsbrücken kann man von Haltepunkten, Haltelinien oder Perforation sprechen. Im Fall der Verwendung eines Laserstrahls wird die Verbindungsbrücke dadurch erhalten, daß der Laserstrahl die äußere Kontur des einzeinen flächigen Gebildes an dieser Stelle nicht abfährt.

Die Form dieser Unterbrechung der Schnittkante ist jedoch in Hinblick auf die Höhe der Schnittkante von Bedeutung. So kann im Einzelfall die Unterbrechung der Schnittkante entsprechend ihrer Höhe sinnvoll sein, in manchen Fällen bietet es sich jedoch an, daß die Unterbrechung nicht die Höhe der Schnittkante erreicht. Dies ist zweckmäßig, wenn z. B. aus einem mehrschichtigen bahnförmigen Material die äußere Kontur des fiächigen Gebiides aus einer oder mehrerer oben liegender Schichten vollständig, in einer darunterliegenden Schicht jedoch nur mit Verbindungsbrücken ausgestanzt werden soll. Die Unterbrechung der Schnittkante entspricht dann der Dicke der Verbindungsbrücke.

Nach erfolgter Durchführung des erfindungsgemäßen Verfahrens erhält man ein flächiges Gebilde, das ggf. in einer Primärverpackung wie einem Siegelrandbeutel oder einer Blisterpackung enthalten ist. Das flächige Gebilde enthält zwei oder mehr Schichten, von denen eine ggf. haftklebend sein und / oder einen pharmazeutischen Wirkstoff enthalten kann. Das flächige Gebilde ist gekennzeichnet durch gebrochene Haltepunkte an der äußeren Kontur einer Trägerschicht.

In einer weiteren Ausführungsform des Verfahrens kann ein zusätzlicher Stanzschritt, bei dem die äußere Kontur mindestens einer Schicht eines mindestens zweischichtigen Ausgangsmaterials vollständig, d. h. ohne Verbindungsbrücke durchgestanzt wird, vorzugsweise direkt nach dem Transportschritt durchgeführt werden. Anschließend erfolgt der Stanzschritt, bei dem mindestens ein Punkt zwischen einer weiteren Schicht des flächigen Gebildes und dem überstehenden Rest dieser Schicht nicht durchstanzt wird. Diese Verfahrensweise ist besonders dann vorteilhaft, wenn die Kontur der auf diese Weise vollständig durchstanzten Schichten eine kleinere Fläche umschließt als die Fläche, die die äußere Kontur der Schicht umschließt, die nur "mit Haltepunkt" durchgestanzt wird.

Es ist klar, daß nicht alle denkbaren Kombinationsmöglichkeiten von ungestanzten und gestanzten Schichten und Anordnungsmöglichkeiten der Haltepunkte beschreiben werden können. Der genaueren Erläuterung einzelner Aspekte der Erfindung dienen die folgenden Abbildungen:

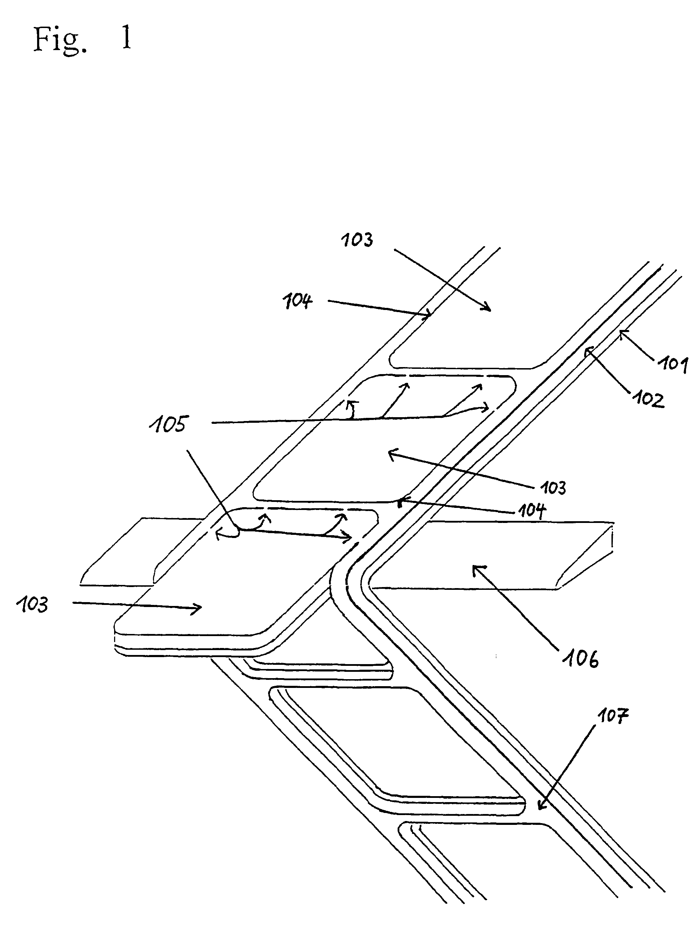

Fig. 1 zeigt perspektivisch ein zweischichtiges bahnförmiges Material mit einer unteren Schicht (101) und einer oberen Schicht (102). Einzelne flächige Gebilde (103) mit rechteckiger, an den Ecken abgerundeter äußerer Kontur (104) sind aus beiden Schichten des bahnförmigen Materials ausgestanzt worden. Haltepunkte (105) sind jeweils im dem hinteren Teil der äußeren Kontur des einzelnen flächigen .Gebildes stehengeblieben. An der Spendevorrichtung (106) erfolgt die Abtrennung des übrigen bahnförmigen Materials (107) unter Bruch dieser Haltepunkte.

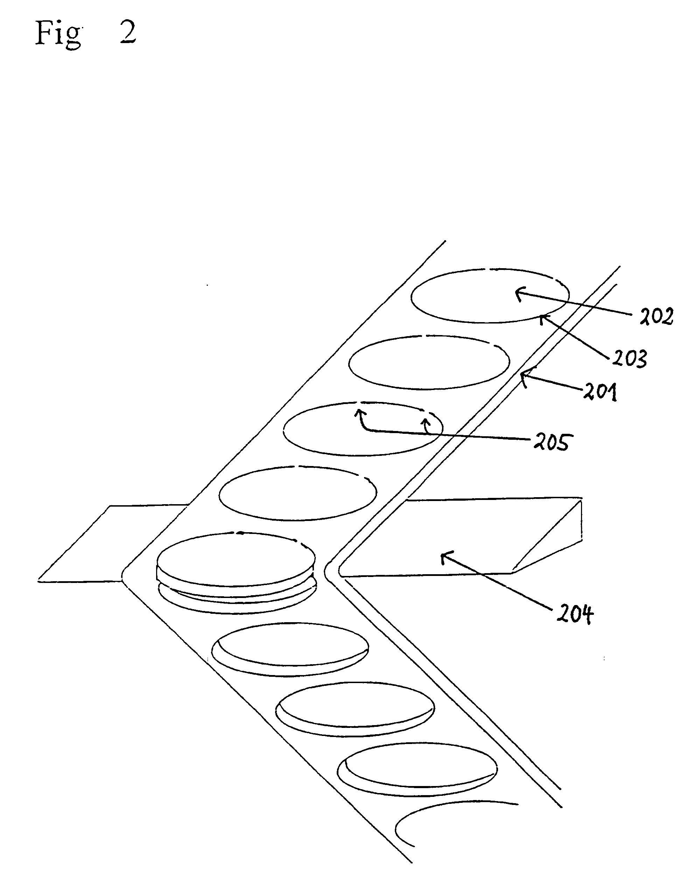

Fig. 2 zeigt perspektivisch ein einschichtiges bahnförmiges Material (201), in das flächige Gebilde (202) mit runder äußerer Kontur (203) ausgestanzt wurden. An der Spendevorrichtung (204) werden die vereinzelten flächigen Gebilde übertragen und der nicht Rest des bahnförmigen Materials unter Bruch der Haltepunkte (205) im hinteren Teil der äußeren Kontur des einzelnen flächigen Gebildes abgetrennt.

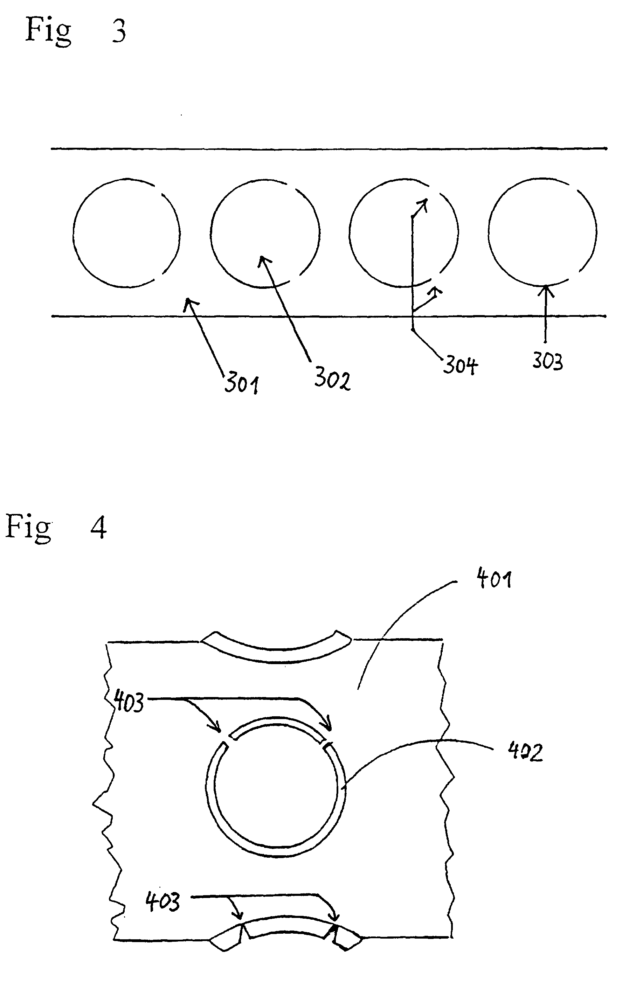

Fig. 3 zeigt in der Draufsicht ein bahnförmiges Material (301), beim dem einzelne fiächige Gebiide (302) mit runder äußerer Kontur (303) und Verbindungsbrücken (304) im hinteren Teil der äußeren Kontur des einzelnen flächigen Gebildes ausgestanzt worden sind.
Fig. 4 zeigt die Schnittkante (402) einer rotativen Schneidwalze (401) mit Unterbrechungen (Kerben) (403) für das Stanzen flächiger Gebilde mit runder äußerer Kontur und Verbindungsbrücken zum übrigen bahnförmigen Material im hinteren Teil der äußeren Kontur des einzelnen flächigen Gebildes. Die Unterbrechungen besitzen die Höhe der Schnittkante, was Verbindungsbrücken in allen Schichten eines zwei- oder mehrschichtigen bahnförmigen Materials erzeugt.

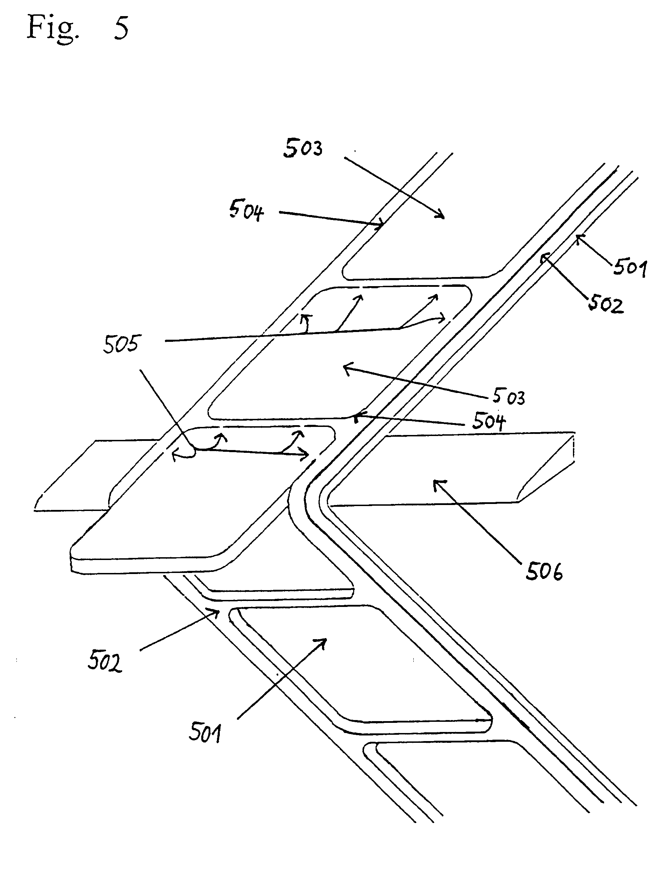

Fig. 5 zeigt perspektivisch ein zweischichtiges bahnförmiges Material mit einer unteren Schicht (501) und einer oberen Schicht (502). Einzeine fiächige Gebiide (503) mit rechteckiger, an den Ecken abgerundeter äußerer Kontur (504) sind ausschließlich aus der oberen Schicht (501) des bahnförmigen Materials ausgestanzt worden.
Haltepunkte (505) sind jeweils im dem hinteren Teil der äußeren Kontur des einzelnen flächigen Gebildes stehengeblieben. An der Spendevorrichtung (506) erfolgt die Abtrennung der vereinzelten flächigen Gebilde vom übrigen bahnförmigen Material der oberen Schicht (502) sowie der gesamten, nichtdurchstanzten unteren Schicht (501) unter Bruch dieser Haltepunkte.

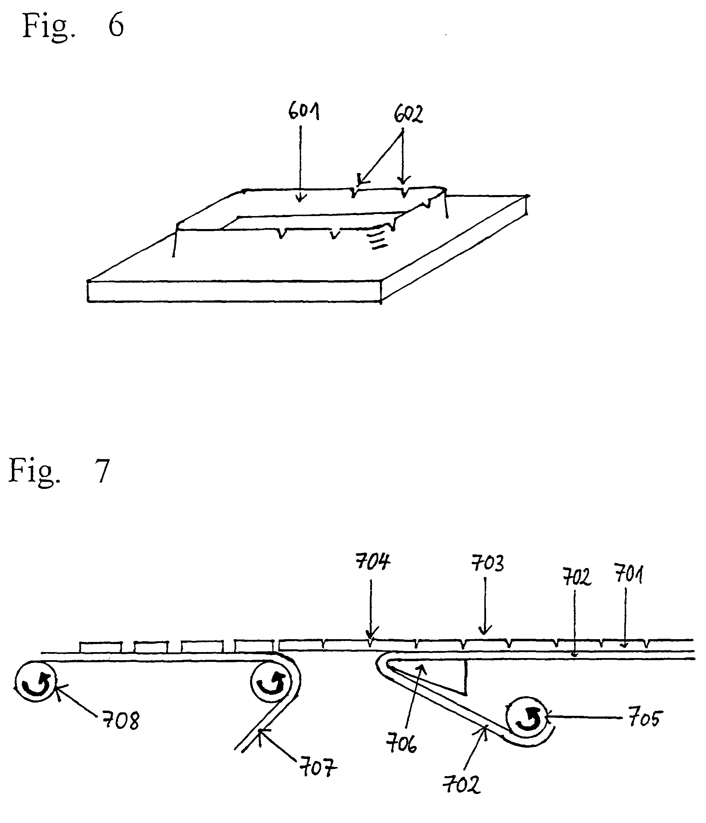

Fig. 6 zeigt die Schnittkante (601) einer Hubstanze mit Unterbrechungen (602) für das Stanzen flächiger Gebilde mit rechteckiger äußerer Kontur und abgerundeten Ecken mit Verbindungsbrücken zum übrigen bahnförmigen Material im hinteren Teil der äußeren Kontur des einzelnen flächigen Gebildes. Die Höhe der Unterbrechungen ist kleiner als die Höhe der Schnittkante, was Verbindungsbrücken nur in den Schichten eines zwei- oder mehrschichtigen bahnförmigen Materials erzeugt, die der Höhe dieser Unterbrechungen entsprechen.
Fig. 7 zeigt in der Seitenansicht ein bahnförmiges Material aus einer oberen Schicht (701) und einer unteren Schicht (702). Die äußere Kontur der einzelnen flächige Gebilde (703) wird so gestanzt, daß sich Haltepunkte (704) im vorderen Teil der äußeren Kontur des einzelnen flächigen Gebildes befinden. Dabei wird lediglich die obere Schicht (701) durchgestanzt. Die Rolle (705) bewegt das zweischichtige bahnförmige Material mit einer bestimmten Geschwindigkeit an die Spendevorrichtung (706). Die einzelnen flächigen Gebilde werden auf eine zweite Transportbahn (707) übertragen, die von der Rolle (708) mit einer höheren Geschwindigkeit als das zweischichtige bahnförmige Material bewegt wird. Die untere Schicht (702) des zweischichtigen Materials wird an der Spendevorrichtung von den einzelnen flächigen Gebilden (703) abgetrennt. Die einzelnen flächigen Gebilde werden unter Bruch der Haltpunkte (704) auf die zweite Transportbahn (707) übertragen und vereinzelt.

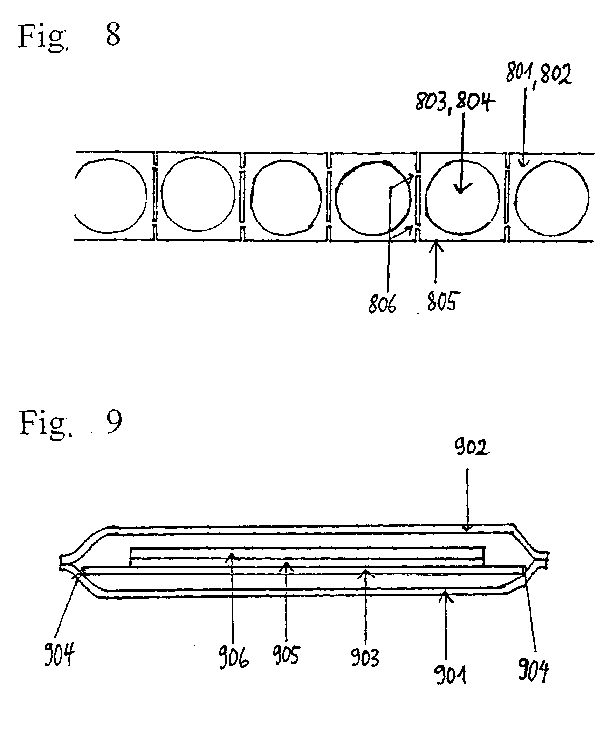

Fig. 8 zeigt in der Draufsicht ein vierschichtiges bahnförmiges Material aus einer unteren Schicht aus Papier (801) mit einer darauf befindlichen Silikonisierungsschicht (802) und einer darüberliegenden Verbundschicht aus einem Haftkleber (803), die mit der obersten Schicht aus einer nichtklebenden Kunststofffolie (804) abgedeckt ist. Die äußere Kontur (805) der einzelnen Gebilde aus dem silikonisierte Papier ist quadratisch und besitzt Haltepunkte (806). Das Spenden von vereinzelten flächigen Gebilden dieser Struktur kann nach dem in Fig. 7 dargestellten Verfahren erfolgen.
Fig. 9 zeigt im Querschnitt ein fertig eingesiegeltes TTS aus unterer Bahn des Siegelrandbeutels (901), oberer Bahn des Siegelrandbeutels (902), Trägerfolie (903) mit gebrochenen Haltepunkten (904) im hinteren Teil der äußeren Kontur der Trägerfolie, wirkstoffhaltiger Haftkleberschicht (905) und nichtklebender Schutzschicht (906).

## Patentansprüche

1. Verfahren zur Herstellung eines einzeln verpackten flächigen Gebildes umfassend die Schritte:
a) Transportieren eines aus mindestens zwei Schichten bestehenden bahnförmigen Ausgangsmaterials in eine geeignete Stanzvorrichtung,
b) Stanzen der äußeren Kontur des flächigen Gebildes aus dem bahnförmigen Ausgangsmaterial,
c) Spenden des flächigen Gebildes an einer Spendevorrichtung,
d) Übertragen der einzelnen flächigen Gebilde auf eine zweite Transportbahn, Abdecken mit einer dritten Bahn und Versiegeln, wobei die zweite Transportbahn und die dritte Bahn eine Verpackung für jeweils ein flächiges Gebilde darstellen, **dadurch gekennzeichnet, dass**
beim Stanzen gemäss b) mindestens ein Punkt zwischen dem flächigen Gebilde und dem überstehenden Rest mindestens einer Schicht des bahnförmigen Ausgangsmaterials nicht durchgestanzt wird, und dadurch beim Spenden gemäss c) ein Bruch am nicht durchgestanzten Punkt zwischen dem flächigen Gebilde und dem überstehenden Rest des bahnförmigen Ausgangsmaterials stattfindet.

2. Verfahren nach Anspruch 1, **dadurch gekennzeichnet, dass** mindestens eine der Schichten des bahnförmigen Ausgangsmaterials beim Stanzen gemäß b) nicht gestanzt und dadurch beim Spenden gemäss c) an der Spendevorrichtung herum geführt und von den gespendeten einzelnen flächigen Gebilden getrennt wird.

3. Verfahren nach Anspruch 1 oder 2, **dadurch gekennzeichnet, daß** eine der Schichten des bahnförmigen Ausgangsmaterials eine einen pharmazeutischen Wirkstoff enthaltende Schicht ist.

4. Verfahren nach einem der Ansprüche 1 bis 3, **dadurch gekennzeichnet, daß** eine der Schichten des bahnförmigen Ausgangsmaterials eine haftklebende Schicht ist.

5. Verfahren nach einem der Ansprüche 1 bis 4, **dadurch gekennzeichnet, daß** die unterste Schicht des bahnförmigen Ausgangsmaterials eine nichthaftklebende Schicht ist.

6. Verfahren nach einem der Ansprüche 1 bis 5, **dadurch gekennzeichnet, daß** das Stanzen gemäss b) mittels einer Stanzvorrichtung erfolgt, bei der es sich um eine rotative Schneidwalze, eine Hubstanze oder einen Laserstrahl handelt.

7. Verfahren nach einem der Ansprüche 1 bis 6, **dadurch gekennzeichnet, daß** die Schritte a) bis c) diskontinuierlich oder kontinuierlich mit einer konstanten oder variablen Geschwindigkeit erfolgen.

8. Vorrichtung zur Herstellung einzeln verpackter flächiger Gebilde umfassend a) eine Vorrichtung zum Transport des mindestens Zweischichtigen bahnförmigen Ausgangsmaterials, b) eine Stanzvorrichtung mit einer Schnittkante, welche die äußere Kontur eines zu stanzenden flächigen Gebildes festlegt und mindestens eine Unterbrechung besitzt, c) eine Spendevorrichtung und d) eine zweite Transportbahn, auf welche die einzelnen flächigen Gebilde übertragen werden und die mit einer dritten Bahn die Verpackung für jeweils ein flächiges Gebilde darstellt, **dadurch gekennzeichnet, daß** die Höhe der Unterbrechung dieser Schnittkante kleiner oder gleich der Höhe der Schnittkante ist, aber mindestens einer Schicht des bahnförmigen Ausgangsmaterials entspricht.

9. Vorrichtung nach Anspruch 8, **dadurch gekennzeichnet, daß** es sich bei der Stanzvorrichtung um eine rotative Schneidwalze oder um eine Hubstanze handelt.

## Claims

1. Method for producing an individually packaged flat form, comprising the following steps:
a) conveying a web-like starting material, consisting of at least two layers, into a suitable punching device,
b) punching out the outer contour of the flat form from the web-like starting material,
c) dispensing the flat form on a dispensing device,
d) transferring the individual flat forms onto a second transport web, covering them with a third web and sealing them, the second transport web and the third web representing a package for in each case one flat form,
**characterized in that**,
in the punching according to b), at least one point between the flat form and the rest of at least one layer of the web-like starting material is not punched through, and **in that**, in the dispensing according to c), a break is made at the unpunched point between the flat form and the rest of the web-like starting material.

2. Method according to Claim 1, **characterized in that** at least one of the layers of the web-like starting material is not punched in the punching according to b) and thus, in the dispensing according to c), is guided round the dispensing device and separated from the dispensed individual flat forms.

3. Method according to Claim 1 or 2, **characterized in that** one of the layers of the web-like starting material is a layer containing a pharmaceutical substance.

4. Method according to one of Claims 1 to 3, **characterized in that** one of the layers of the web-like starting material is an adhesive layer.

5. Method according to one of Claims 1 to 4, **characterized in that** the lowermost layer of the web-like starting material is a nonadhesive layer.

6. Method according to one of Claims 1 to 5, **characterized in that** the punching according to b) is carried out by means of a punching device which is a rotary cutting roller, a lifting punch or a laser beam.

7. Method according to one of Claims 1 to 6, **characterized in that** steps a) to c) are carried out non-continuously or continuously at a constant or variable speed.

8. Device for producing individually packaged flat forms, comprising a) a device for conveying the at least two-layer web-like starting material, b) a punching device with a cutting edge which defines the outer contour of a flat form to be punched and has at least one interruption, c) a dispensing device, and d) a second transport web onto which the individual flat forms are transferred and which, with a third web, represents the package for in each case one flat form, **characterized in that** the height of the interruption of this cutting edge is less than or equal to the height of the cutting edge but corresponds to at least one layer of the web-like starting material.

9. Device according to Claim 8, **characterized in that** the punching device is a rotary cutting roller or a lifting punch.

## Revendications

1. Procédé de fabrication d'un produit plat emballé de manière individuelle, comprenant les étapes consistant à :
a) transporter un matériau de départ sous forme de bande constitué d'au moins deux couches vers un dispositif de poinçonnage approprié,
b) poinçonner le contour extérieur du produit plat à partir du matériau de départ sous forme de bande,
c) distribuer le produit plat sur un dispositif de distribution,
d) transférer les produits plats individuels sur une deuxième bande de transport, les recouvrir avec une troisième bande et les métalliser sous vide, moyennant quoi la deuxième bande de transport et la troisième bande constituent l'emballage pour chaque produit plat, **caractérisé en ce que**
lors du poinçonnage selon b) au moins un point entre le produit plat et le reste faisant saillie d'au moins une couche du matériau de départ sous forme de bande n'est pas perforé, et **en ce que** lors de la distribution selon c), une rupture se produit sur le point non perforé entre le produit plat et le reste en saillie du matériau de départ sous forme de bande.

2. Procédé selon la revendication 1, **caractérisé en ce qu'**au moins une des couches du matériau de départ sous forme de bande lors du poinçonnage selon b) n'est pas poinçonnée et **en ce que** lors de la distribution selon c), est guidée sur le dispositif de distribution et séparé en des produits plats individuels distribués.

3. Procédé selon la revendication 1 ou 2, **caractérisé en ce qu'**une des couches du matériau de départ sous forme de bande est une couche contenant un agent pharmaceutique.

4. Procédé selon l'une des revendications 1 à 3, **caractérisé en ce qu'**une des couches du matériau de départ sous forme de bande est une couche autoadhésive.

5. Procédé selon l'une des revendications 1 à 4, **caractérisé en ce que** la couche inférieure du matériau de départ sous forme de bande est une couche non autoadhésive.

6. Procédé selon l'une des revendications 1 à 5, **caractérisé en ce que** le poinçonnage selon b) se fait à l'aide d'un dispositif de poinçonnage, qui peut être un cylindre de rognage rotatif, une machine à poinçonner et à lever ou un rayon laser.

7. Procédé selon l'une des revendications 1 à 6, **caractérisé en ce que** les étapes a) à c) s'effectuent de manière discontinue ou continue avec une vitesse variable ou constante.

8. Dispositif de fabrication de produits plats emballés de manière individuelle comprenant a) un dispositif permettant de transporter le matériau de départ sous forme de bande constitué d'au moins deux couches, b) un dispositif de poinçonnage comprenant une arête de coupe, laquelle détermine le contour extérieur d'un produit plat destiné à être poinçonné et présente au moins une interruption, c) un dispositif de distribution et d) une deuxième bande de transport sur laquelle sont transférés les produits plats individuels et qui constitue avec une troisième bande l'emballage pour chaque produit plat, **caractérisé en ce que** la hauteur de l'interruption de cette arête de coupe est inférieure ou égale à la hauteur de l'arête de coupe, mais correspond à au moins une couche du matériau de départ sous forme de bande.

9. Dispositif selon la revendication 8, **caractérisé en ce** le dispositif de poinçonnage est un cylindre de rognage rotatif ou une machine à poinçonner et à lever.
